# EUROPEAN PATENT SPECIFICATION

(11) **EP 4 122 738 B1**
(45) Date of publication and mention of the grant of the patent: **13.08.2025**
(21) Application number: 22180284.6
(22) Date of filing: 22.06.2022
(51) Int. Cl.: B60K 35/10, B60K 35/22, B60K 35/65, B60K 35/80

(54) **CONFIGURABLE USER INTERFACE**
KONFIGURIERBARE BENUTZERSCHNITTSTELLE
INTERFACE UTILISATEUR CONFIGURABLE

(30) Priority: 20.07.2021 GB 202110408
(43) Date of publication of application: 25.01.2023
(73) Proprietor: AGCO International GmbH, 8212 Neuhausen am Rheinfall (CH)
(72) Inventor: VONROTH, Daniel, 87488 Betzigau (DE); WEIGAND, Jan, 87616 Marktoberdorf (DE)
(74) Representative: AGCO Intellectual Property Department

(56) References cited:
- EP-A1- 3 486 106
- EP-A1- 3 536 654
- EP-A2- 1 714 823
- US-A1- 2016 004 383

## Description

### TECHNICAL FIELD

The present invention relates, in general, to a configurable user interface for a vehicle, and in particular for an agricultural vehicle such as a tractor or combine harvester.

### BACKGROUND

EP1586970 discloses a user interface comprising a display and a control panel with several keys, four of which are programmable or configurable. The display is used to show the functions that have been assigned to the four configurable keys. Due to the relatively small number of the configurable keys it is easy for the operator to remember and to distinguish the four configurable keys from the other non-configurable keys, and further which functions may be assigned to those keys. In contrast, it quickly becomes impractical for an operator of a user interface comprising more control keys to remember which of them are configurable; which specific functions can be assigned to those configurable keys, or not; and/or which functions have already been assigned to which control keys. In an agricultural vehicle it is common for the user interface to include many more than four control keys. For example, some consoles may include upwards of 40 control keys.

EP 3 536 654 A1 discloses a human machine interface with a driver display and a plurality of function keys. A toggle key is provided for the function keys, upon actuation of which toggle key a second function is assigned to at least one of the function keys. The second function can be called up via the corresponding function key for a predetermined period of time after actuation of the toggle key. The second function may be a function that can be freely programmed by a driver.

US 2016/004383 A1 discloses a steering wheel including one or more back-lit liquid crystal diode (LCD) displays with touch screens. The displays can display control widgets such as buttons, sliders, etc. The steering wheel may provide user-configurable controls to ensure that the driver has instant access to the controls/information he desires. The driver may configure the controls and display such that the driver has the controls/information of his choosing conveniently located on the steering wheel.

EP 1 714 823 A2 discloses a human machine interface for an agricultural tractor comprising a display and a knob. When a joystick icon of the Parliament menu shown in the display is selected, an operator may assign different functions to the movement and actuation of a joystick to suit the task in hand.

EP 3 486 106 A1 discloses a driver interface system comprising a steering wheel having input areas and buttons. Each button has a plurality of assignable functions and a present function. The present function is one of its plurality of assignable functions. The buttons are considered variable-function input devices.

There is therefore a need to improve upon known user interfaces and the control thereof, particularly those for agricultural vehicles, to improve the ease of use of such interfaces.

### SUMMARY OF THE INVENTION

In an aspect of the invention there is provided a control system for controlling a console of an agricultural vehicle, the control system comprising one or more controllers, and being configured to: receive a first user input indicative of a selected vehicle function to be assigned to a control key of the console; determine at least one configurable control key for the selected vehicle function; control output of one or more indicators comprising a lighting device integrated with a respective control key to indicate, to an operator of the vehicle, the configurability of the at least one configurable control key; receive a second user input indicative of a selected configurable control key for assignment of the selected vehicle function; assign the selected vehicle function to the selected configurable control key; and control a colour of the one or more indicators in dependence on a compatibility of the corresponding control key with the selected vehicle function.

Advantageously, the control system of the present invention assists a user in both identifying configurable control keys and subsequently assigning vehicle functions to those keys for later use. In having the user interact with the same element (control key) for programming/assigning a function to that key and operation of the function after programming, the configuration process provided by the invention is very intuitive and promotes the user to remember which key was configured with which function.

The one or more controllers may collectively comprise an input (e.g. an electronic input) for receiving one or more input signals indicative of the first and/or second user input. The one or more controllers may collectively comprise one or more processors (e.g. electronic processors) operable to execute computer readable instructions for controlling operation of the control system, for example to determine the at least one configurable control key; control output of the one or more indicators; and/or assign the selected vehicle function. The one or more processors may be operable to generate one or more control signals for Z. The one or more controllers may collectively comprise an output (e.g. an electronic output) for outputting the one or more control signals.

The control system may be configured to determine the at least one configurable control key in dependence on the type of vehicle function selected by the user. The type of vehicle function may comprise: a binary function; a discrete function; an analog function; or a combination thereof. A binary function may be a function which may be in one of two operational states, which may include switching a device of the vehicle (e. g. a light) on or off, for example. A discrete function may be one which may be in one of a plurality of different discrete states, which may include the stepwise changing a parameter of a device of the vehicle (e. g. an increase or decrease in the brightness of the light between multiple different brightness levels). An analog function may be one which may include the ability to continuously changing a parameter of a device of the vehicle (again, this may include an increase or decrease in the brightness of the light, but this time over a continuous range of brightness levels).

The control system may be configured to determine the at least one configurable control key for the selected vehicle function in dependence on a compatibility of the control key(s) with the selected vehicle function. The control system may be configured to determine the at least one configurable control key for the selected vehicle function in dependence on a compatibility of the control key(s) with the type of vehicle function selected. For example, each of the at least one configurable control key may be compatible with one or more different vehicle function types. For example, one or more control keys may only be compatible with a first vehicle function type, e.g. a binary function type, whereas other control key(s) may be compatible with second and/or third vehicle function types, e.g. discrete or continuous.

The console may comprise one or more key pairs. The or each key pair may include two (or more) configurable control keys for controlling operation of a common vehicle function. For example, a common vehicle function may include a lighting function of the vehicle, or a volume function, etc. which is adjustable in two (or more) directions - e.g. increasing/decreasing brightness/volume. The control system may be configured to determine whether the selected vehicle function requires assignment of a key pair. In dependence on the requirement of the assignment of a key pair, the control system may be configured to control output of one or more indicators to indicate, to an operator of the vehicle, the configurability of one or more key pairs compatible with the selected vehicle function. For example, where a vehicle function is selected which requires assignment of a key pair, the control system may be operable to control output of the one or more indicators to indicate, to the user, only those configurable control keys which are compatible - I.e. only those which form part of a key pair.

The control system may be configured, e.g. upon receipt of the second user input indicative of the selection of a first configurable control key of a key pair, to assign a first setting option of the selected vehicle function to the selected first configurable control key. The control system may then be configured to prompt a user to select a second configurable control key for assigning a second setting option of the selected vehicle function. The control system may be configured to assign a second setting option of the selected vehicle function to the second configurable control key of the key pair, e.g. automatically upon selection of the first configurable control key by the user. Advantageously, the vehicle function may be assigned to both control keys of the key pair upon a single user input.

The lighting device(s) may include one or more of a light emitting diode (LED); and/or a liquid crystal display (LCD).

The control system may be configured to control a colour of the one or more indicators in dependence on an assignment status of the corresponding control key. The assignment status may correspond to whether said control key has a vehicle function assigned thereto.

Assigning the selected vehicle function to the selected configurable control key may comprise storing an assigned relationship between the selected vehicle function and the selected configurable control key in a memory accessible by the control system. This may comprise a local memory device of a controller of the control system, or indeed may comprise a remote storage means, such as a remote server.

The control system may be configured to receive the first user input via a further user interface. The further user interface may comprise a display device, e.g. a touch screen display device or the like forming part of the console.

According to another aspect of the invention there is provided a console for an agricultural vehicle, comprising at least one configurable control key; and wherein the console comprises or is configured to be controlled by a control system of any preceding aspect of the invention.

The console may comprise any one or more features of the console controllable under operation of the control system of the preceding aspect of the invention.

For example, the console may include two (or more) configurable control keys defined as a key pair. The control system may be configured to: assign a first setting option of the selected vehicle function to a first control key of the key pair; and assign a second setting option of the selected vehicle function to a second control key of the key pair when one key of the key pair was selected.

The console may comprise a joystick. The joystick may include a thumb control panel. Where present, first and second control keys of a key pair may be provided as part of the thumb control panel.

In a further aspect of the invention there is provided an agricultural vehicle, comprising the control system and/or the console of any aspect described herein.

The agricultural vehicle may comprise a tractor, or a harvesting machine, such as a combine or forage harvester, for example.

Another aspect of the invention provides a method of controlling a console of an agricultural vehicle, comprising: receiving a first user input indicative of a selected vehicle function to be assigned to a control key of the console; determining at least one configurable control key for the selected vehicle function; outputting one or more indicators to indicate, to an operator of the vehicle, the configurability of the at least one configurable control key; controlling a colour of the one or more indicators in dependence on a compatibility of the corresponding control key with the selected vehicle function; receiving a second user input indicative of a selected configurable control key for assignment of the selected vehicle function; and assigning the selected vehicle function to the selected configurable control key.

The method may comprise determining the at least one configurable control key in dependence on the type of vehicle function selected by the user. The type of vehicle function may comprise: a binary function; a discrete function; an analog function; or a combination thereof.

The method may comprise determining the at least one configurable control key for the selected vehicle function in dependence on a compatibility of the control key(s) with the selected vehicle function. The method may comprise determining the at least one configurable control key for the selected vehicle function in dependence on a compatibility of the control key(s) with the type of vehicle function selected. For example, each of the at least one configurable control key may be compatible with one or more different vehicle function types. For example, one or more control keys may only be compatible with a first vehicle function type, e.g. a binary function type, whereas other control key(s) may be compatible with second and/or third vehicle function types, e.g. discrete or continuous.

The console may comprise one or more key pairs. The or each key pair may include two (or more) configurable control keys for controlling operation of a common vehicle function. For example, a common vehicle function may include a lighting function of the vehicle, or a volume function, etc. which is adjustable in two (or more) directions - e.g. increasing/decreasing brightness/volume. The method may comprise determining whether the selected vehicle function requires assignment of a key pair. In dependence on the requirement of the assignment of a key pair, the method may comprise outputting the one or more indicators to indicate, to an operator of the vehicle, the configurability of one or more key pairs compatible with the selected vehicle function. For example, where a vehicle function is selected which requires assignment of a key pair, the method may include outputting the one or more indicators to indicate, to the user, only those configurable control keys which are compatible - i.e. only those which form part of a key pair.

The method may comprise, e.g. upon receipt of the second user input indicative of the selection of a first configurable control key of a key pair, assigning a first setting option of the selected vehicle function to the selected first configurable control key. The method may then comprise prompting a user to select a second configurable control key for assigning a second setting option of the selected vehicle function. Method may comprise assigning a second setting option of the selected vehicle function to the second configurable control key of the key pair, e.g. automatically upon selection of the first configurable control key by the user. Advantageously, the vehicle function may be assigned to both control keys of the key pair upon a single user input.

The one or more indicators may comprise a lighting device integrated with a respective control key. The lighting device(s) may include one or more of a light emitting diode (LED); and/or a liquid crystal display (LCD).

The method may comprise controlling a colour of the one or more indicators in dependence on an assignment status of the corresponding control key. The assignment status may correspond to whether said control key has a vehicle function assigned thereto.

Assigning the selected vehicle function to the selected configurable control key may comprise storing an assigned relationship between the selected vehicle function and the selected configurable control key in a memory device. This may comprise a local memory device of a controller associated with the console, or indeed may comprise a remote storage means, such as a remote server.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention will now be described, by way of example only, with reference to the accompanying drawings, in which:
- Figure 1: is a perspective view illustrating an embodiment of a console of the present invention;
- Figure 2: is a further perspective view of components of the console shown in Figure 1;
- Figure 3: illustrates a control key forming part of the console of the preceding Figures;
- Figure 4: is a schematic representation of an embodiment of a control system of the present invention;
- Figure 5: is a flowchart illustrating an embodiment of a method of the invention; and
- Figure 6: is a schematic side view of a tractor embodying aspects of the present invention.

### DETAILED DESCRIPTION

The invention relates to a user interface, in the illustrated embodiments a console 1 comprising multiple configurable keys 7.1-7.8, 8.1-8.8, etc. for controlling functions of an agricultural vehicle, here in the form of a tractor 50, although the skilled person will appreciate that the invention is applicable to other agricultural vehicles, including combine harvesters, forage harvesters and the like, or indeed to vehicles more generally, including automotive vehicles or other work vehicles.

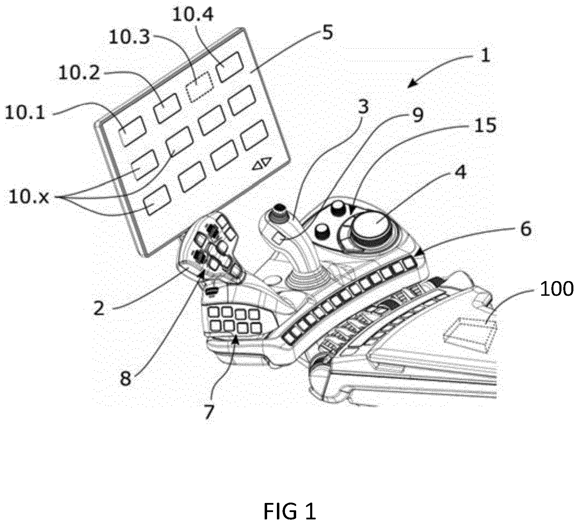

The console 1, as shown in **Fig. 1****,** comprises several input devices, including a control lever 2, a joystick 3, a control knob 4, a touch sensitive screen 5 and a console keypad 6. Each of the input devices can comprise additional keypads or control keys, as discussed herein.

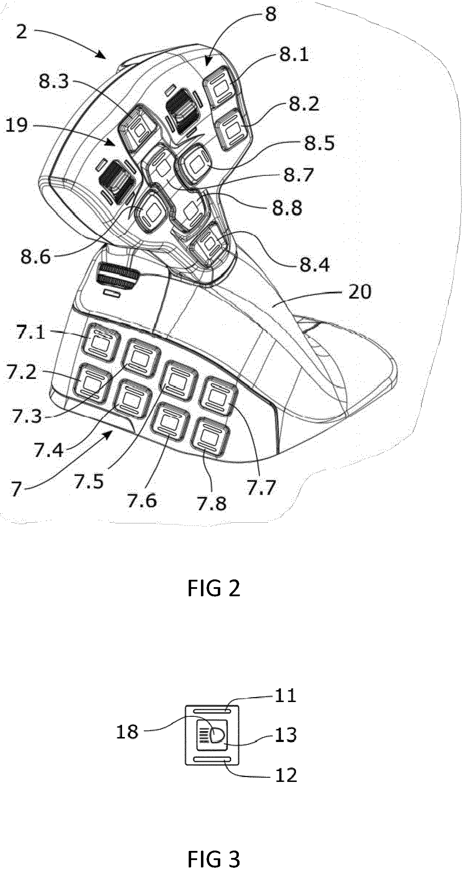

In the illustrated example, the lever 2 comprises a first keypad 7 and a second keypad 8, each having respective control keys 7.1-7.8; 8.1-8.8. As shown in **Fig. 2****,** the lever 2 comprises a handle portion 20 suitable shaped to be grasped by an operator, in use, and the first keypad 7 is arranged at a lower part of this handle portion 20. The second keypad 8 is arranged as part of a thumb control panel 19 of the lever 2. The control keys 8.1-8.8 of the thumb control panel 19 are controllable by the thumb of an operator while the other fingers of his hand grasp the handle portion 20.

The first keypad 7 of the lever 2 comprises eight different control keys 7.1 to 7.8 and the second keypad 8 of the lever 2 comprises eight different control keys 8.1 to 8.8. The control keys 7.1-7.8 can be of different shape for optimized ergonomics, as will be appreciated. In the illustrated example, and as an example only, control keys 8.7 and 8.8 comprise a combined surface with a concave shape so that a thumb of an operator can slide continuously between the control keys 8.7 and 8.8.

The joystick 3 is also shaped to be grasped by an operator, in use. As will be appreciated, the joystick 3 may be displaceable in one, two or more directions to provide a directional input for the tractor 50, e.g. to control a steering direction of the tractor 50 or indeed movement of an implement coupled thereto (not shown). The joystick 3 in the illustrated embodiment includes a control key 9 positioned on a side of the joystick 3.

The control knob 4 comprises a rotary control and is provided with an additional keypad 15 adjacent thereto. The additional keypad 15 itself includes a number of control keys. It will be appreciated that the touch sensitive screen 5 may be used to display multiple different display screens depending on the operation of the tractor 50. Here, in the illustrated embodiment the display screen 5 is showing multiple virtual keys 10.1 - 10.x, the operational use of which is discussed hereinbelow. The console keypad 6 takes the form of a line of user operable control keys, here positioned below the lever 2, joystick 3 and control knob 4. The operational use of the control keys of the console keypad 6 is described further below.

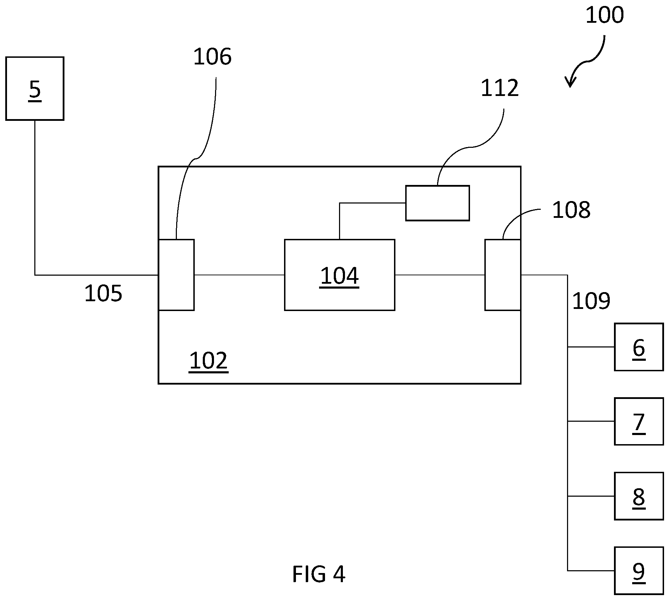

The console 1 comprises and is controllable under operation of a control system 100, as illustrated in **Fig. 4****.** The control system 100 comprises a controller 102 having an electronic processor 104, an electronic input 106, and an electronic output 108. The processor 104 is operable to access a memory 112 of the controller 102 and execute instructions stored therein to perform the steps and functionality of the present invention discussed herein, e.g. by controlling indicator elements of appropriate control keys 7.1-7.8, 8.1-8.8, etc. (see below) and/or to control the storing of configured settings, e.g. vehicle functions assigned to respective control keys, which may also be stored in the memory 112.

The control system 100 may additionally be operable to cause/trigger operation of a vehicle function in dependence on one or more of the control keys being pressed or otherwise activated by an operator. In such an embodiment, the control system 100, and specifically the controller 102 may include one or more additional electronic outputs for outputting control signal(s) to respective functional components of the tractor 50, either directly or via local control units associated with those functions.

The operational use of embodiments of the invention is now discussed with reference to the Figures.

As discussed herein, the present invention relates to assigning different vehicle functions, or at least control over those functions to respective control keys (or other control elements) of the console 1. The functions can be any one or more of:
a binary function, i.e. one which may be in one of two operational states, which may include switching a device of the vehicle (e. g. a light) on or off;
a discrete function, i.e. one which may be in one of a plurality of different discrete states, which may include the stepwise changing a parameter of a device of the vehicle (e. g. an increase or decrease in the brightness of the light between multiple different brightness levels); and/or
an analog function, e.g. continuously changing a parameter of a device of the vehicle (again, this may include an increase or decrease in the brightness of the light, but this time over a continuous range of brightness levels).

The following table **Tab. 1** shows an example, non-complete list of example vehicle functions and an indication of a possible function type.

**Tab. 1: Function types of vehicle functions.**

| Vehicle function | Function object | Function type | | |
|---|---|---|---|---|
| | | Binary | Discrete | Analog |
| Switching headlights on / off | 10.1 | X | | |
| Switching parking brake apply / release | 10.2 | X | | |
| Changing screen brightness | 10.3 | | X | |
| Switching cabin lights on / off | 10.4 | X | | |
| Changing cabin light brightness | 10.5 | | X | X |
| Switching radio on / off | 10.6 | X | | |
| Changing volume of radio | 10.7 | | X | X |
| Changing vehicle chassis height | 10.8 | | | X |
| Changing hitch height | 10.9 | | | X |
| Changing front loader height | 10.10 | | | X |
| Changing cruise control speed | 10.11 | | X | X |
| Switching windscreen wiper on / off | 10.12 | X | | |
| Changing windscreen wiper speed | 10.13 | | X | X |

In case of a function of a binary type, the function can be toggled by pressing the relevant control key a first time to activate the function and pressing the same control key a second time to deactivate the function.

In case of a function of a discrete type, a parameter is changed from one value to another value by stepwise increasing or decreasing the parameter by a predefined value after every control key press or after a predefined time interval as long as the control key is pressed and held, e. g. a stepwise increase of the parameter by 5 % every 200 milliseconds.

In case of a function of an analog type, a parameter is changed from one value to another value by continuously increasing or decreasing the parameter as long as the control key is pressed and held.

Besides triggering a function using the control keys, a function can also be triggered by touching the touch sensitive screen 5. All available vehicle control functions can be displayed on the screen 5 as virtual keys 10.1 to 10.x. Depending on whether the function is of a binary, discrete or analog type the function can be triggered analogously to the pressing scheme of the control keys 7.1 to 7.8, 8.1 to 8.8 or 9 as described above.

Fig. 3 represents one of the control keys of the console 1, e. g. one of the keys 7.1 to 7.8, 8.1 to 8.8 or 9 (each key of the console 1 can be designed as the key shown in Fig. 3). The control key shown in Fig. 3 comprises indicators 11, 12, 13. The indicators 11, 12 are integrated in the key and in the illustrated embodiment are of an optical type, specifically a light emitting diode (LED) 11, 12. Indicator 13 comprises a liquid crystal display (LCD) 13. It will be appreciated that other types of optical indicators can be integrated in the control key.

The LEDs 11 and 12 are configured to emit light in different colors as red, blue, green, white etc. The LCD 13 displays symbols or pictograms representing a function assigned to that key. In the illustrated example, the control key is configured to control switching of a headlight of the tractor 50, and the LED 13 displays a standardized headlight symbol 18.

All keys, i.e. the control keys as well as the virtual keys, can be distinguished between two groups: configurable keys and non-configurable keys. Here, the property whether a key is configurable or not is stored in the memory 112. If a key is configurable the operator can assign any vehicle control function to that key. If a key is non-configurable the function of the key cannot be changed by assigning another function.

Non-configurable keys may be predefined and in some instances may be reserved for functions required by national regulations, which may include the (de-)activation of a parking brake of the tractor 50, for example. In addition, the (non-)configurability may depend on the type of the function to be assigned to the key, e.g. dependent on whether the assigned function is a binary, discrete or analog function (as described above). It is possible that the configurability of a key is restricted to one of the three types (e. g. binary only), to two of the three types (e. g. binary and discrete only) or to all three types (i. e. binary, discrete and analog). The property of the key which function types can be assigned is stored in the memory 112, e. g. as a lookup table.

Some control keys of the console 1 are combined as a key pair. A key pair defines a set of two keys which are both automatically configured with a function when one of the both keys is selected by the operator to assign the function - i.e. the function will be split on the two keys of the key pair without the need to select both keys separately for the assignment. Preferably, the key pairs are used for vehicle functions having two, especially complementary, setting options wherein one setting option is assigned to one key of the key pair and the other setting option is assigned to the other key of the key pair. For example: The vehicle function 10.3 "Changing screen brightness" enables to increase or decrease the brightness of the screen 5. If an operator selects a key of a key pair to assign the vehicle function 10.3 to the selected key the control system 100 splits the vehicle function 10.3 and assigns the setting option for increasing the brightness of the screen 5 to a first control key of the key pair and the setting option for decreasing the brightness of the screen 5 to a second control key of the key pair. The property of a control key being part of a key pair (or not) is stored in the memory 112.

In the illustrated embodiment, the configurability of the control key 9 associated with the joystick 3, the control keys of keypads 6 and 15 are restricted to the binary functions. Control keys 8.1, 8.2, 8.5, 8.6, 8.7 and 8.8 of the lever 2 are configurable with a function of any of the three types binary, discrete or analog. The thumb control panel 19 of the lever 2 comprises at least one key pair, here including a first key pair including the keys 8.1 and 8.2, a second key pair including the keys 8.5 and 8.6 and a third key pair including the keys 8.7 and 8.8.

One of the indicators 11, 12 or 13 is used to indicate to the operator whether a specific function can be assigned to a particular control key. For example, the indicator 11 of all keys configurable with a particular function is configured/controlled to emit a green light whereas the indicators 12 of all keys non-configurable with the specific function is configured/controlled to emit a red light. In addition or alternatively, the indicator 13 can display a "Y" if an assignment of the function complies with the property of the control key, or an "N" if not.

In an extension, at least one of the indicators 11, 12 or 13 of a control key, when configurable with the particular function, may be controlled to indicate when no function is assigned to the control key such that the operator is informed that the key may be assignable. In another variant, at least one of the indicators 11, 12 or 13 of a control key, when configurable with a particular function, may be controlled to indicate when a function has been already assigned to the control key such that the operator is informed that any new assignment would override the currently assigned function.

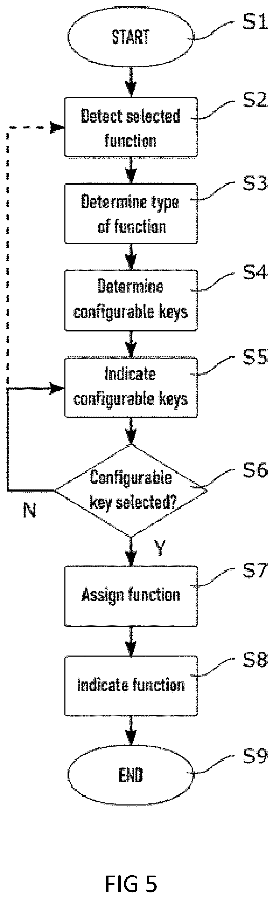

Fig. 5 shows several steps of a computer implemented method that can be stored as a computer program product in the memory 112. As discussed herein, the control system 100 is suitable configured to execute the computer implemented method described herein.

The method is used for assigning a vehicle function (e. g. one of Tab. 1) to a key of the console 1 wherein the method advises the operator which keys of the console 1 are configurable based on the type of the vehicle function.

The method starts with step S1 when the operator activates it e. g. by touching an app icon on the touch sensitive screen 5.

The method proceeds with step S2 and detects which vehicle function the operator wants to assign to a control key. The available vehicle functions to be assigned to a key can be displayed on the screen 5. Each vehicle function can be represented by a corresponding function object 10.1 to 10.x. The operator can select a specific function by touching the corresponding function object on the screen 5. It is assumed that the operator wants to assign the function "Changing screen brightness" to a control key of the console 1 and touched the corresponding function object 10.3. As shown in Fig. 5 for example, the control system 100 is configured to determine the selection of function object 10.3 highlighted with a dotted line on the screen 5.

The method proceeds with step S3 and determines the type of the selected vehicle function, here the selected vehicle function 10.3. Specifically, the method comprises determining whether the vehicle function is of a binary, discrete or analog type or a combination thereof. The corresponding type of the vehicle function 10.3 is stored in the memory 112, for example in terms of a look up table similar to Tab. 1. The controller 102 (e.g. the processor 104 thereof) is configured to match the selected vehicle function 10.3 with the stored look up table and determine here that the vehicle function 10.3 is of a discrete type.

The method proceeds with **step S4** and determines all control keys of the console 1 to which a vehicle function of a type of the selected vehicle function can be assigned to. Since the selected vehicle function 10.3 is of a discrete type, the processor 104 determines all control keys of the console 1 to which a vehicle function of a discrete type can be assigned to. This information can be gathered by the processor 104 by matching the discrete function type of the selected vehicle function 10.3 with another look up table stored in the memory 112 that contains the property of each control key, e.g. the processor 104 is configured, for each control key, to determine whether its property complies with the type of the selected function, here the discrete type. If so, that control key is determined by the processor 104 as a configurable key.

In addition, the processor 104 is configured to check whether the selected vehicle function 10.3 requires a key pair. If so, only control keys being part of a key pair and complying with the function type will be determined by the processor 104 as a configurable key.

By way of example only, it is assumed now that
- the keys of the keypad 15 are non-configurable due to a reservation for functions required by national regulations,
- the keys 8.1, 8.2, 8.5 - 8.8 of the thumb control panel 19 are configurable for vehicle functions of any of the three function types (binary, discrete and analog), and
- the other keys of the console 1, e. g. keys 7.1 - 7.8, 9, all keys of keypad 6, etc., can be configured with binary vehicle functions, only.

In such an example, the processor 104 is configured to determine the keys 8.1, 8.2, 8.5 - 8.8 of the thumb control panel 19 as configurable keys for assigning the selected vehicle function 10.3.

The method proceeds with **step S5** and indicates all configurable control keys to the operator. As explained above there are multiple possibilities. For example, the control system 100 may be configured to control operation of the first indicator 11 of each configurable control key to illuminate a light in a first colour (e. g. green). In addition, the control system 100 is configured to control operation of the second indicator 12 of those configurable keys having a vehicle function already assigned thereto to illuminate a second light (e. g. yellow). In this way, the operator can easily see which keys of the console 1 can be configured and which of those are already assigned to a vehicle function.

To assign the selected vehicle function 10.3 to at least one of the configurable control keys the operator needs to select one. In this way, the operator is required to press or touch the same control key during the configuration process that he will press or touch again during live operation to initiate / adjust the function assigned to that control key.

In contrast to a virtual configuration process or an offboard configuration process using a programming tool other than the control key, the operator uses exactly the same element (key) for programming and operation after programming. I. e. the configuration process is very intuitive and promotes the user to remember which key was configured with which function. If the operator calls the function assigned to the control key in live operation the user presses or touches the key at least a second time because the first touch or press was done for the configuration process.

The method proceeds with **step S6** to check whether a configurable control key was selected by the operator. The control system 100 is configured to detect a control key selection when the operator presses or touches a key. If the key comprises a proximity sensor the key selection can be detected contactless.

The control system 100 is then configured to determine whether the selected control key is configurable for assigning the selected vehicle function 10.3. If so, for example when the operator pressed one of the control keys 8.1, 8.2, 8.5 - 8.8, the method proceeds with step S7. If not, the method steps back to step S5. If the operator touched the screen 5 to select a vehicle function the method steps back to step 2.

In **step S7,** the control system 100 assigns the selected vehicle function 10.3 to the selected control key and stores the assignment to the memory 112. If the selected vehicle function has two setting options (as the function 10.3 to lighten and to darken the screen 5), the first setting option of the function will be assigned to the control key selected by the operator and the other setting option to the other control key of the key pair. For example: If the operator pressed the key 8.7 of the key pair 8.7 and 8.8, the control system 100 assigns the setting option lighten the screen 5 to the pressed key 8.7 and the complementary setting option darken the screen 5 automatically to the other key 8.8 of the key pair.

After the assignment of the selected vehicle function 10.3 to a selected configurable control key the method proceeds with **step S8** to indicate the type of assigned function to the operator. For example, indicator 13 can display a pictogram or a symbol corresponding to the function assigned to the control key. Alternatively, the indictor 11 or 12 can emit a colored light as a color code for the assigned function, e. g. yellow to indicate an light control function, red to indicate an entertainment function, green to indicate a comfort function, etc. Preferably, the indicator 11, 12 or 13 used to indicate the configurable keys is the same to indicate the assigned function.

Finally, the methods ends with **step S9.**

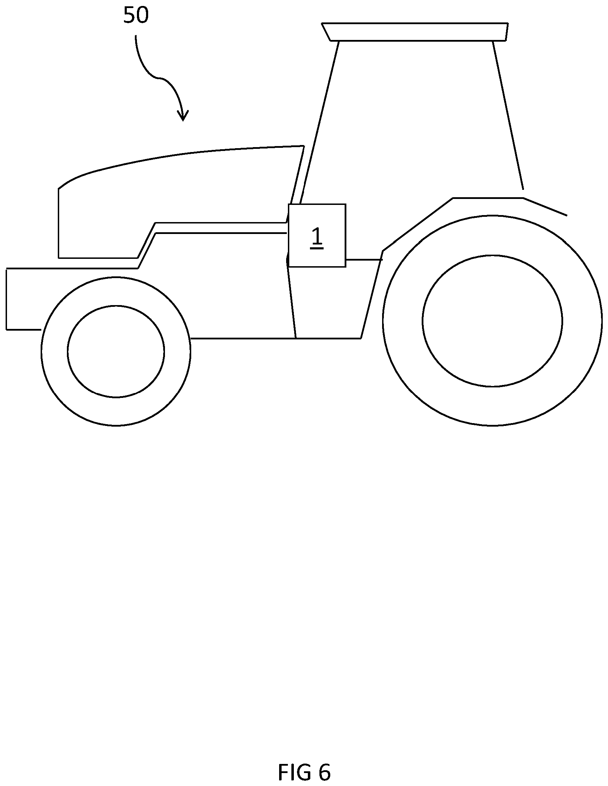

**Fig. 6** illustrates a tractor 50 comprising the console 1 discussed herein.

In a variant, one or more of the control keys are equipped with a proximity sensor (not shown) operable to detect an approaching of a finger of the operator towards the control key before the finger gets in contact with the control key.

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

It will be appreciated that the above embodiments are discussed by way of example only. Various changes and modifications can be made without departing from the scope of the present application.

Finally, the methods ends with **step S9.**

**Fig. 6** illustrates a tractor 50 comprising the console 1 discussed herein.

In a variant, one or more of the control keys are equipped with a proximity sensor (not shown) operable to detect an approaching of a finger of the operator towards the control key before the finger gets in contact with the control key.

Any blocks in flow diagrams represent modules, segments, or portions of code which include one or more executable instructions for implementing specific logical functions or steps in the process. The functions may be executed out of order from that shown or discussed, including substantially concurrently or in reverse order.

Software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. The storage devices are embodiments of machine-readable storage that are suitable for storing a program.

## Claims

1. A control system for controlling a console (1) of an agricultural vehicle, the control system comprising one or more controllers, and being configured to:
receive a first user input indicative of a selected vehicle function (10.3) to be assigned to a control key of the console (1);
determine at least one configurable control key for the selected vehicle function (10.3);
control output of one or more indicators (11, 12, 13) comprising lighting devices integrated with a respective control key to indicate, to an operator of the vehicle, the configurability of the at least one configurable control key;
receive a second user input indicative of a selected configurable control key for assignment of the selected vehicle function (10.3); and
assign the selected vehicle function (10.3) to the selected configurable control key;
**characterized in that** the control system is configured to:
control a colour of the one or more indicators (11, 12, 13) in dependence on a compatibility of the corresponding control key with the selected vehicle function (10.3).

2. A control system as claimed in claim 1, configured to determine the at least one configurable control key in dependence on the type of vehicle function selected by the user.

3. A control system as claimed in claim 2, wherein the type of vehicle function comprises: a binary function; a discrete function; an analog function; or a combination thereof.

4. A control system as claimed in any preceding claim, wherein the control system is configured to determine the at least one configurable control key for the selected vehicle function (10.3) in dependence on a compatibility of the control key(s) with the selected vehicle function (10.3).

5. A control system as claimed in claim 4, when dependent on claim 2 or claim 3, wherein the control system is configured to determine the at least one configurable control key for the selected vehicle function (10.3) in dependence on a compatibility of the control key(s) with the type of vehicle function selected.

6. A control system as claimed in any preceding claim, wherein the console (1) comprises one or more key pairs (8.1, 8.2, 8.5 - 8.8), the or each key pair (8.1, 8.2, 8.5 - 8.8) comprise two configurable control keys for controlling operation of a common vehicle function; and wherein the control system is configured to:
determine whether the selected vehicle function (10.3) requires assignment of a key pair (8.1, 8.2, 8.5 - 8.8); and
control output of one or more indicators (11, 12, 13) to indicate, to an operator of the vehicle, the configurability of one or more key pairs (8.1, 8.2, 8.5 - 8.8) compatible with the selected vehicle function (10.3).

7. A control system as claimed in claim 6, configured, upon receipt of the second user input indicative of the selection of a first configurable control key of a key pair (8.1, 8.2, 8.5 - 8.8), to:
assign a first setting option of the selected vehicle function (10.3) to the selected first configurable control key; and
assign a second setting option of the selected vehicle function (10.3) to the second configurable control key of the key pair (8.1, 8.2, 8.5 - 8.8).

8. A control system as claimed in any preceding claim, wherein the one or more indicators (11, 12, 13) comprise one or more of a light emitting diode (LED); and/or a liquid crystal display (LCD).

9. A control system as claimed in any preceding claim, configured to control a colour of the one or more indicators (11, 12, 13) in dependence on an assignment status of the corresponding control key.

10. A console (1) for an agricultural vehicle, comprising at least one configurable control key; wherein the console (1) comprises or is configured to be controlled by a control system of any preceding claim.

11. A console (1) as claimed in claim 10, comprising two configurable control keys defined as a key pair (8.1, 8.2, 8.5 - 8.8); and wherein the control system is configured to:
assign a first setting option of the selected vehicle function (10.3) to a first control key of the key pair (8.1, 8.2, 8.5 - 8.8); and
assign a second setting option of the selected vehicle function (10.3) to a second control key of the key pair (8.1, 8.2, 8.5 - 8.8) when one key of the key pair (8.1, 8.2, 8.5 - 8.8) was selected.

12. A console (1) as claimed in claim 11, comprising a joystick (3) with a thumb control panel; and wherein the first and second control keys of the key pair (8.1, 8.2, 8.5 - 8.8) are provided as part of the thumb control panel.

13. A method of controlling a console (1) of an agricultural vehicle, comprising:
receiving a first user input indicative of a selected vehicle function (10.3) to be assigned to a control key of the console (1);
determining at least one configurable control key for the selected vehicle function (10.3);
outputting one or more indicators (11, 12, 13) to indicate, to an operator of the vehicle, the configurability of the at least one configurable control key;
receiving a second user input indicative of a selected configurable control key for assignment of the selected vehicle function (10.3); and
assigning the selected vehicle function (10.3) to the selected configurable control key;
**characterized by**
controlling a colour of the one or more indicators (11, 12, 13) in dependence on a compatibility of the corresponding control key with the selected vehicle function (10.3).

## Patentansprüche

1. Steuersystem zum Steuern einer Konsole (1) eines landwirtschaftlichen Fahrzeugs, wobei das Steuersystem mindestens einen Controller aufweist und dafür konfiguriert ist,
eine erste Nutzereingabe zu empfangen, die indiziert, dass einer Steuertaste der Konsole (1) eine ausgewählte Fahrzeugfunktion (10.3) zugewiesen werden soll;
mindestens eine konfigurierbare Steuertaste für die gewählte Fahrzeugfunktion (10.3) zu ermitteln;
eine Ausgabe mindestens eines Indikators (11, 12, 13) mit Beleuchtungsgeräten, die in eine zugeordnete Steuertaste integriert sind, zu steuern, um einem Nutzer des Fahrzeugs zu indizieren, dass die mindestens eine konfigurierbare Steuertaste konfigurierbar ist;
eine zweite Nutzereingabe zu empfangen, die eine gewählte konfigurierbare Steuertaste für eine Zuordnung der gewählten Fahrzeugfunktion (10.3) indiziert; und
die ausgewählte Fahrzeugfunktion (10.3) der ausgewählten konfigurierbaren Steuertaste zuzuordnen;
**dadurch gekennzeichnet, dass** das Steuersystem dafür konfiguriert ist,
eine Farbe des mindestens einen Indikators (11, 12, 13) in Abhängigkeit von einer Kompatibilität der korrespondierenden Steuertaste mit der ausgewählten Fahrzeugfunktion (10.3) zu steuern.

2. Steuersystem nach Anspruch 1, welches dafür konfiguriert ist, die mindestens eine konfigurierbare Steuertaste in Abhängigkeit von dem Typ der Fahrzeugfunktion, der von dem Nutzer ausgewählt wird, zu ermitteln.

3. Steuersystem nach Anspruch 2, wobei der Typ der Fahrzeugfunktion aufweist: eine binäre Funktion, eine diskrete Funktion, eine analoge Funktion oder eine Kombination dieser Funktionen.

4. Steuersystem nach einem der vorhergehenden Ansprüche, wobei das Steuersystem dafür konfiguriert ist, die mindestens eine konfigurierbare Steuertaste für die ausgewählte Fahrzeugfunktion (10.3) in Abhängigkeit von einer Kompatibilität der mindestens einen Steuertaste mit der ausgewählten Fahrzeugfunktion (10.3) zu ermitteln.

5. Steuersystem nach Anspruch 4 in Abhängigkeit von Anspruch 2 oder Anspruch 3, wobei das Steuersystem dafür konfiguriert ist, die mindestens eine konfigurierbare Steuertaste für die ausgewählte Fahrzeugfunktion (10.3) in Abhängigkeit von einer Kompatibilität der mindestens einen Steuertaste mit dem Typ der gewählten Fahrzeugfunktion zu ermitteln.

6. Steuersystem nach einem der vorhergehenden Ansprüche, wobei die Konsole (1) mindestens ein Tastenpaar (8.1, 8.2, 8.5 - 8.8) aufweist, wobei das oder jedes Tastenpaar (8.1, 8.2, 8.5 - 8.8) zwei konfigurierbare Steuertasten für ein Steuern des Betriebs einer gemeinsamen Fahrzeugfunktion aufweist; und wobei das Steuersystem dafür konfiguriert ist,
zu ermitteln, ob die gewählte Fahrzeugfunktion (10.3) eine Zuordnung eines Tastenpaars (8.1, 8.2, 8.5 - 8.8) erfordert; und
eine Ausgabe mindestens einen Indikators (11, 12, 13) zu steuern, um dem Betreiber des Fahrzeugs zu indizieren, dass die Konfigurierbarkeit mindestens eines Tastenpaars (8.1, 8.2, 8.5 - 8.8) mit der ausgewählten Fahrzeugfunktion (10.3) kompatibel ist.

7. Steuersystem nach Anspruch 6, wobei dieses konfiguriert ist, mit dem Empfang der zweiten Nutzereingabe, die die Wahl einer ersten konfigurierbaren Steuertaste eines Tastenpaars (8.1, 8.2, 8.5 - 8.8) indiziert,
eine erste Einstellungsoption der ausgewählten Fahrzeugfunktion (10.3) der ausgewählten ersten konfigurierbaren Steuertaste zuzuordnen; und
eine zweite Einstellungsoption der ausgewählten Fahrzeugfunktion (10.3) der zweiten konfigurierbaren Steuertaste des Tastenpaars (8.1, 8.2, 8.5 - 8.8) zuzuordnen.

8. Steuersystem nach einem der vorhergehenden Ansprüche, wobei der mindestens eine Indikator (11, 12, 13) mindestens eine Licht ausstrahlende Diode (LED) und/oder eine Flüssigkeitskristall-Anzeige (LCD) aufweist.

9. Steuersystem nach einem der vorhergehenden Ansprüche, konfiguriert für eine Steuerung einer Farbe des mindestens einen Indikators (11, 12, 13) in Abhängigkeit von einem Zuordnungsstatus der korrespondierenden Steuertaste.

10. Konsole (1) für ein landwirtschaftliches Fahrzeug mit mindestens einer konfigurierbaren Steuertaste, wobei die Konsole (1) ein Steuersystem nach einem der vorhergehenden Ansprüche aufweist oder für eine Steuerung durch ein derartiges Steuersystem konfiguriert ist.

11. Konsole (1) nach Anspruch 10, mit zwei konfigurierbaren Steuertasten, die als ein Tastenpaar (8.1, 8.2, 8.5 - 8.8) definiert sind oder werden; und wobei das Steuersystem dafür konfiguriert ist, eine erste Einstellungsoption der ausgewählten Fahrzeugfunktion (10.3) einer ersten Steuertaste des Tastenpaars (8.1, 8.2, 8.5 - 8.8) zuzuordnen; und
eine zweite Einstellungsoption der ausgewählten Fahrzeugfunktion (10.3) einer zweiten Steuertaste des Tastenpaars (8.1, 8.2, 8.5 - 8.8) zuzuordnen, wenn eine Taste des Tastenpaars (8.1, 8.2, 8.5 - 8.8) ausgewählt worden ist.

12. Konsole (1) nach Anspruch 11, mit einem Joystick (3) mit einem Daumen-Steuerpaneel, wobei die erste und zweite Steuertaste des Tastenpaars (8.1, 8.2, 8.5 - 8.8) als Teil des Daumen-Steuerpaneels bereitgestellt sind.

13. Verfahren zum Steuern einer Konsole (1) eines landwirtschaftlichen Fahrzeugs, mit:
einem Empfangen einer ersten Nutzereingabe, die eine ausgewählte Fahrzeugfunktion (10.3) indiziert, die einer Steuertaste der Konsole (1) zugeordnet werden soll;
einem Ermitteln mindestens einer konfigurierbaren Steuertaste für die ausgewählte Fahrzeugfunktion (10.3);
einem Ausgeben mindestens eines Indikators (11, 12, 13), um einem Betreiber des Fahrzeugs zu indizieren, dass die mindestens eine konfigurierbare Steuertaste konfigurierbar ist;
einem Empfangen einer zweiten Nutzereingabe, die eine ausgewählte konfigurierbare Steuertaste für die Zuordnung der ausgewählten Fahrzeugfunktion (10.3) indiziert; und
einem Zuordnen der ausgewählten Fahrzeugfunktion (10.3) zu der ausgewählten konfigurierbaren Steuertaste;
**gekennzeichnet durch**
ein Steuern einer Farbe des mindestens einen Indikators (11, 12, 13) in Abhängigkeit von einer Kompatibilität der korrespondierenden Steuertaste mit der ausgewählten Fahrzeugfunktion (10.3).

## Revendications

1. Dispositif de commande destiné à commander une console (1) d'un véhicule agricole, le dispositif de commande comprenant une ou plusieurs unités de commande et étant configuré de manière à :
recevoir une première entrée d'utilisateur représentative d'une fonction de véhicule sélectionnée (10.3) à affecter à une touche de commande de la console (1) :
déterminer au moins une touche de commande pouvant être configurée pour la fonction de véhicule sélectionnée (10.3) ;
commander la sortie d'un ou plusieurs indicateurs (11, 12, 13) comprenant des dispositifs lumineux intégrés avec une touche de commande respective afin d'indiquer à un opérateur du véhicule la capacité de configuration de la au moins une touche de commande pouvant être configurée ;
recevoir une seconde entrée d'utilisateur représentative d'une touche de commande pouvant être configurée sélectionnée en vue de l'affectation de la fonction de véhicule sélectionnée (10.3) ; et
affecter la fonction de véhicule sélectionnée (10.3) à la touche de commande pouvant être configurée sélectionnée,
**caractérisé en ce que** le dispositif de commande est configuré de manière à :
commander une couleur de ou des indicateurs (11, 12, 13) en fonction d'une compatibilité de la touche de commande correspondante avec la fonction de véhicule sélectionnée (10.3).

2. Dispositif de commande selon la revendication 1, configuré de manière à déterminer la au moins une touche de commande pouvant être configurée selon le type de fonction de véhicule sélectionné par l'utilisateur.

3. Dispositif de commande selon la revendication 2, dans lequel le type de fonction de véhicule comprend une fonction binaire ; une fonction discrète, une fonction analogique ou une combinaison de ces dernières.

4. Dispositif de commande selon l'une quelconque des revendications précédentes, dans lequel le dispositif de commande est configuré de manière à déterminer la au moins une touche de commande pouvant être configurée pour la fonction de véhicule sélectionnée (10.3) en fonction d'une compatibilité de la ou des touches de commande avec la fonction de véhicule sélectionnée (10.3).

5. Dispositif de commande selon la revendication 4 lorsqu'elle dépend de la revendication 2 ou 3, dans lequel le dispositif de commande est configuré de manière à déterminer la au moins une touche de commande pouvant être configurée pour la fonction de véhicule sélectionnée (10.3) en fonction d'une compatibilité de la ou des touches de commande avec le type de fonction de véhicule sélectionné.

6. Dispositif de commande selon l'une quelconque des revendications précédentes, dans lequel la console (1) comprend une ou plusieurs paires de touches (8.1, 8.2, 8.5 à 8.8), la ou chaque paire de touches (8.1, 8.2, 8.5 à 8.8) comprend deux touches de commande pouvant être configurées afin de commander l'activation d'une fonction de véhicule commune ; et dans lequel le dispositif de commande est configuré de manière à :
déterminer si la fonction de véhicule sélectionnée (10.3) nécessite l'affectation d'une paire de touches (8.1, 8.2, 8.5 à 8.8) ;et
commander la sortie d'un ou plusieurs indicateurs (11, 12, 13) afin d'indiquer à un opérateur du véhicule la capacité de configuration d'une ou plusieurs paires de touches (8.1, 8.2, 8.5 à 8.8) compatibles avec la fonction de véhicule sélectionnée (10.3).

7. Dispositif de commande selon la revendication 6, configuré, lors de la réception de la seconde entrée d'utilisateur représentative de la sélection d'une première touche de commande pouvant être configurée d'une paire de touches (8.1, 8.2, 8.5 à 8.8), de manière à :
affecter une première option de réglage de la fonction de véhicule sélectionnée (10.3) à la première touche de commande pouvant être configurée sélectionnée ; et
affecter une seconde option de réglage de la fonction de véhicule sélectionnée (10.3) à la seconde touche de commande pouvant être configurée de la paire de touches (8.1, 8.2, 8.5 à 8.8).

8. Dispositif de commande selon l'une quelconque des revendications précédentes, dans lequel le ou les indicateurs (11, 12, 13) comprennent un ou plusieurs éléments parmi une diode luminescente (LED) ; et/ou un dispositif d'affichage à cristaux liquides (LCD).

9. Dispositif de commande selon l'une quelconque des revendications précédentes, configuré de manière à commander une couleur de ou des indicateurs (11, 12, 13) en fonction d'un état d'affectation de la touche de commande correspondante.

10. Console (1) destinée à un véhicule agricole, comprenant au moins une touche de commande pouvant être configurée ; dans laquelle la console (1) comprend un dispositif de commande selon l'une quelconque des revendications précédentes ou est configurée de manière à être commandée par ce dernier.

11. Console (1) selon la revendication 10, comprenant deux touches de commande pouvant être configurées, définies comme une paire de touches (8.1, 8.2, 8.5 à 8.8) ; et dans laquelle le dispositif de commande est configuré de manière à :
affecter une première option de réglage de la fonction de véhicule sélectionnée (10.3) à une première touche de commande de la paire de touches (8.1, 8.2, 8.5 à 8.8) ; et
affecter une seconde option de réglage de la fonction de véhicule sélectionnée (10.3) à une seconde touche de commande (8.1, 8.2, 8.5 à 8.8) de la paire de touches (8.1, 8.2, 8.5 à 8.8) lorsqu'une touche de la paire de touches (8.1, 8.2, 8.5 à 8.8) est sélectionnée.

12. Console (1) selon la revendication 11, comprenant une manette (3) avec un panneau de commande au pouce ; et dans laquelle les première et seconde touches de commande des paires de touches (8.1, 8.2, 8.5 à 8.8) sont agencées sous la forme d'une partie du panneau de commande au pouce.

13. Procédé de commande d'une console (1) d'un véhicule agricole, comprenant ;
la réception d'une première entrée d'utilisateur représentative d'une fonction de véhicule sélectionnée (10.3) à affecter à une touche de commande de la console (1).
la détermination d'au moins une touche de commande pouvant être configurée pour la fonction de véhicule sélectionnée (10.3) ;
la sortie d'un ou plusieurs indicateurs (11, 12, 13) afin d'indiquer, à un opérateur du véhicule, la capacité de configuration de la au moins une touche de commande pouvant être configurée,
la réception d'une seconde entrée d'utilisateur représentative d'une touche de commande pouvant être configurée sélectionnée en vue de l'affectation à la fonction de véhicule sélectionnée (10.3) ; et
l'affectation de la fonction de véhicule sélectionnée (10.3) à la touche de commande pouvant être configurée sélectionnée ;
**caractérisé par**
la commande d'une couleur de ou des indicateurs (11, 12, 13) en fonction d'une compatibilité de la touche de commande correspondante avec la fonction de véhicule sélectionnée (10.3).
